Europäisches Patentamt

European Patent Office

Office européen des brevets

(11) Numéro de publication: **0 283 345 B1**

## FASCICULE DE BREVET EUROPEEN

(45) Date de publication de fascicule du brevet: **15.04.92** (51) Int. Cl.5: **C09J 175/06**

(21) Numéro de dépôt: **88400377.3**

(22) Date de dépôt: **19.02.88**

Le dossier contient des informations techniques présentées postérieurement au dépôt de la demande et ne figurant pas dans le présent fascicule.

(54) **Polymère thermofusible et son application au collage de matériaux.**

(30) Priorité: **13.03.87 FR 8703441**

(43) Date de publication de la demande:
**21.09.88 Bulletin 88/38**

(45) Mention de la délivrance du brevet:
**15.04.92 Bulletin 92/16**

(84) Etats contractants désignés:
**AT BE CH DE ES GB GR IT LI LU NL SE**

(56) Documents cités:
**EP-A- 0 087 329**
**EP-A- 0 197 845**
**DE-A- 2 344 707**

(73) Titulaire: **SWIFT ADHESIFS**
**Avenue Robert Schuman B.P. 915**
**F-41009 Blois Cedex(FR)**

(72) Inventeur: **Thibaut, Jean-Pierre**
**Résidence 1e Haut-chapitre 169 rue Albert 1er**
**F-41000 Blois(FR)**
Inventeur: **Tezenas, Philippe**
**95 rue du Foix**
**F-41000 Blois(FR)**
Inventeur: **Vitian, Iancu**
**Villesavoir Chouzy sur Cisse**
**F-41150 Onzain(FR)**

(74) Mandataire: **Hirsch, Marc-Roger**
**Cabinet Hirsch 34 rue de Bassano**
**F-75008 Paris(FR)**

# EP 0 283 345 B1

## Description

La présente invention concerne un polymère thermofusible, utile comme agent adhésif pour faire adhérer des surfaces de matériaux, identiques ou différents. L'invention concerne aussi le procédé de fabrication de ce polymère.

Pour faire adhérer deux surfaces formées de substances identiques ou différentes, il est souhaitable d'utiliser un agent adhésif qui permette une adhérence élevée et rapide entre ces deux surfaces, qui ne soit pas sensible aux variations de température et qui présente de bonnes propriétés mécaniques.

On connaît de DE-P-2 344 707 de Schering l'utilisation, à titre d'adhésif, d'un polymère type polyester-polyuréthane en solution, obtenu, entre autres, par réaction d'un diisocyanate et d'un composé hydroxyle bifonctionnel présentant un indice d'hydroxyle compris entre 30 et 100. Le polymère ainsi obtenu cependant est essentiellement un matériau thermoplastique, donc est incapable de se réticuler. Il diffère fondamentalement du produit de l'invention et ne permet pas d'obtenir les résultats auxquels conduit, de façon surprenante et inattendue, le polymère thermofusible selon l'invention.

La présente invention fournit un prépolymère bloc thermofusible comprenant des séquences polyuréthanne et polycaprolactone et présentant un taux de groupe NCO libres compris entre 1% et 5%. Bien entendu ce prépolymère peut comporter des blocs formés du composants de départ.

Dans ce prépolymère la proportion pondérale des séquences uréthannes -NH-CO.O- et des séquences polycaprolactone -$(C_6H_{10}O_2)_n$- est de préférence comprise entre 1,1% et 2,1% et 10% et 40% respectivement.

Ce prépolymère est obtenu par réaction:

1.- d'une résine à base de polycaprolactone contenant de 0,07 à 0,15% de groupements OH libres par mole;

2.- d'un polyol à bas point de fusion; et

3.- d'un diisocyanate de fonctionalité comprise entre 1,1 et 4 et comprenant de 1 à 5% de groupes NCO libres par mole de polymère thermofusible.

Les prépolymères selon l'invention après réticulation présentent une bonne résistance aux températures allant de 50°C à 140°C environ. Leur viscosité est relativement faible, ce qui facilite leur utilisation dans des dispositifs de couchage ou d'étendage. Ils ont un pouvoir adhésif élevé et de bonnes propriétés mécaniques.

Par suite de ces propriétés, les prépolymères selon l'invention sont utiles, comme agent de liaison, pour faire adhérer des surfaces de matériaux identiques ou différents. Leur application est aisée et, par suite de leur pouvoir adhésif élevé, les surfaces ainsi liées peuvent être manipulées immédiatement après le collage. Leur résistance thermique après réticulation leur permet de conserver leur pouvoir adhésif jusqu'à des températures de l'ordre de 140°C. En effet, leurs propriétés mécaniques s'améliorent avec le temps par suite d'une réticulation qui a lieu après leur application sur les supports et qui est due à la présence de groupes NCO libres. En effet, ceux-ci réagissent avec l'humidité de l'air ou des groupements actifs des supports traités.

Les proportions pondérales de chacun de ces composants sont comprises entre 10 et 40 pour la résine à base de polycaprolactone, entre 40 et 80 pour le polyol et entre 10 et 30 pour le diisocyanate. De préférence, les proportions pondérales des composants du prépolymère thermofusible sont de l'ordre de 25/60/15 respectivement.

Comme on l'a indiqué précédemment, les prépolymères selon l'invention résultent de la réaction d'une résine à base de polycaprolactone, d'un polyol et d'un diisocyanate.

Le polyol est un homopolyester aliphatique à bas point de fusion, inférieur à 100°C, comprenant des groupes terminaux hydroxyles. Sa masse moléculaire est comprise entre 2 000 et 6 000. Il présente un indice d'hydroxyle compris entre 20 et 110 et son point de fusion est situé, de préférence, entre 50°C et 90°C. Un polymère de ce type, utilisé de préférence, est un polymère de condensation de l'acide adipique et de l'hexanediol ou polyester cristallin issu de la réaction de polycondensation de diacide linéaire et diol linéaire. Ce composé a pour but de régler le temps ouvert et le temps de prise de la masse thermofusible.

Par "temps ouvert" on entend la durée qui s'écoule entre l'application de l'adhésif et la mise en contact intime des substrats avec ou sans pression. Le temps ouvert limite est la durée au delà de laquelle l'affichage ou assemblage devient "inefficace". Par "temps de prise", on entend la durée au cours de laquelle les forces d'adhésion et de cohésion sont développées par voie chimique ou physique, par exemple refroidissement et réticulation. Le temps de prise limite est le temps de prise minimum au bout duquel l'assemblage devient manipulable.

En utilisant un polymère de ce type, on peut obtenir des temps ouverts et des temps de prise limite compris entre 30 secondes et 10 minutes. Ces durées dépendent des masses moléculaires pour une structure donnée. Ainsi, une masse moléculaire élevée donnera un temps de prise limite plus court qu'une masse moléculaire faible. Ce polymère sert aussi de milieu solvant pour les autres composants avant l'addition du diisocyanate. Le polyol confère au prépolymère final de bonnes propriétés mécaniques, en ce qui concerne la résistance à la traction et l'allongement à la rupture. Il permet l'obtention d'un prépolymère ayant une bonne stabilité à des températures de 160°C à 200°C. Le polyol permet aussi d'obtenir une masse polymère de viscosité relativement faible, ce qui facilite son utilisation dans des dispositifs de couchage. Le polymère final, à 150°C, présente une viscosité comprise entre 5 000 et 100 000 m Pa.s.

Le deuxième composant du prépolymère selon l'invention est une résine à base de polycaprolactone comprenant des groupements OH libres. Cette résine peut être un polyester ayant la structure polycaprolactone, tel que le produit "Tone PCL 700" de Union Carbide. Ce produit a une masse moléculaire moyenne de 40 000, un point de fusion de 60°C, une température de transition vitreuse de -60°C. Le pourcentage d'élongation est de 500 à 1 000 et celui des groupes hydroxyles de 0,07 à 0,15.

Cette résine peut être associée ou non à un copolyester formé par polycondensation de l'acide adipique, de l'acide isophtalique et de l'hexanediol. Le réseau peut être amorphe à cristallin. Ce copolyester peut se présenter sous une forme liquide ou solide et avoir une masse moléculaire de 1 000 à 15 000. L'indice d'hydroxyle est situé entre 5 et 150. Ce polyester permet d'améliorer l'adhérence sur les substrats tels que les métaux. Il permet la plastification interne du prépolymère.

La résine peut être aussi associée à un polyuréthane linéaire faiblement cristallin. Il est dérivé d'un polyester et d'un polyisocyanate. Un polyuréthanne utile présente un pourcentage d'hydroxyle de 0,1 à 0,3 et une masse moléculaire de 10 000 à 50 000.

La résine utilisée pour la réalisation de l'invention doit être compatible et soluble dans l'homopolyester à bas point de fusion (polyol) afin de former un mélange homogène et liquide à une température de 80 à 130°C dans lequel on peut introduire le troisième composant, le diisocyanate, et obtenir ainsi la réaction avec chacun des constituants hydroxylés.

Ce composant résineux confère, au prépolymère final, des propriétés mécaniques (module d'élasticité et résistance à la rupture initiaux) très utiles lorsque le prépolymère sert d'adhésif, et ceci avant même qu'il y ait réticulation du prépolymère, due aux groupements isocyanates libres réagissant avec l'humidité de l'air.

Le troisième composant du prépolymère selon l'invention est un diisocyanate aromatique, aliphatique ou cycloaliphatique de fonctionalité comprise entre 1,1 et 4. On peut utiliser, comme diisocyanate, le diisocyanate de diphénylméthane 4,4' pur ou bien des mélanges d'isomères 2,4' et 4,4' de diisocyanate de diphénylméthane ou des adducts de diisocyanate. On peut aussi utiliser du diisocyanate d'isophorone et du diisocyanate d'hexaméthylène. D'une façon générale, l'acidité est faible pour permettre une bonne réactivité (% de HCl entre 0,003 et 0,008).

Le polymère final selon l'invention doit contenir un pourcentage de groupements isocyanate libres compris entre 1 et 5% et, de préférence, entre 1,5 et 2%. Ces groupes isocyanates libres réagissent avec l'humidité de l'air ou des groupements actifs des supports à traiter, ce qui permet d'améliorer l'adhérence entre les supports et d'obtenir des propriétés de résistance à des températures de 50°C à 140°C. Pour obtenir une meilleure réticulation du polymère après couchage sur les supports, le diisocyanate a, de préférence, une fonctionalité supérieure à 2.

Un prépolymère thermofusible particulièrement utile est celui formé d'un polyester à structure polycaprolactone dont le pourcentage de groupes hydroxyles est compris entre 0,07 et 0,15, d'un homopolyester à bas point de fusion dérivant de la polycondensation de l'acide adipique et de l'hexanediol, ayant un indice d'hydroxyle entre 20 et 100 et d'un diisocyanate de diphénylméthane, dans des proportions pondérales de 25/60/15 respectivement.

On prépare le polymère thermofusible, objet de la présente invention, par polyaddition en masse, en associant le polymère à base de caprolactone et le polyol et en ajoutant, ensuite, le diisocyanate. La température de la réaction est de l'ordre de 80°C à 130°C. Les polymères sont alors fondus et le milieu réactionnel est homogène. Pour éliminer l'eau contenue dans les différents polyols, on fait le vide dans le réacteur. La durée de la réaction de polyaddition est de l'ordre de 3 à 4 heures.

L'isocyanate est introduit en quantité suffisante pour, qu'en fin de réaction, le taux en groupes NCO libres soit compris entre 1 et 5% et, de préférence, entre 1,5 et 2%. La présence de ces groupes NCO libres est importante puisqu'elle va permettre une réticulation du polymère thermofusible par suite de la réaction des groupes NCO avec l'humidité de l'air ou des groupes actifs des supports à traiter, ce qui entraîne une amélioration des propriétés mécaniques et thermiques.

Le polymère obtenu se présente sous la forme d'une masse solide à une température inférieure à 40°C. On peut le stocker, à l'abri de l'humidité, dans tous containers appropriés.

Différents additifs peuvent être ajoutés lors de la préparation du polymère thermofusible de manière à modifier ses propriétés.

Ainsi, on peut ajouter des plastifiants permettant, comme il est bien connu, de modifier les propriétés plastiques du polymère. On peut ajouter des plastifiants inertes tels que le phtalate de dibutyle ou le phtalate de dioctyle. On peut aussi utiliser des plastifiants réticulables qui comportent des groupes hydroxyles libres, par exemple, des polyéthers ou des polyesters. Leur masse moléculaire est comprise, par exemple, entre 1 000 et 2 000. On les ajoute en quantité de 5 à 10%.

On peut aussi utiliser toutes charges connues et, en particulier, de la silice pyrogénée ayant subi un traitement de surface afin de la rendre hydrophobe, du noir de carbone pour assurer une réticulation à coeur plus rapide par transmission de l'humidité. On peut aussi ajouter du bioxyde de titane. Ces charges sont introduites à raison de 1 à 5%.

On peut aussi utiliser des promoteurs d'adhérence tels que des époxysilanes. On peut les ajouter au moment de la réaction de polymérisation. On obtient, ainsi, une amélioration de l'adhérence sur différents métaux, notamment sur l'aluminium. L'addition de catalyseurs tels que des amines (Union Carbide, Niax TMBDA) à raison de 0,005% permet d'améliorer la vitesse de réticulation en présence d'humidité.

EXEMPLES DE FORMULES

| . diisocyanate | 184 | 195 | 247 | 196 | 197 |
| . polyester cristallin | 800 | 700 | 700 | 700 | 800 |
| . résine caprolactone | 200 | 300 | 200 | 200 | |
| . résine plastifiante réticulable | | | 100 | | |
| . résine copolyester | | | | 100 | |
| . résine polyuréthanne | | | | | 200 |

Quand on utilise le prépolymère selon l'invention comme composé adhésif pour lier deux surfaces, on porte le polymère à une température de l'ordre de 158° C afin d'obtenir une masse fondue. On l'applique sur au moins une des surfaces que l'on désire faire adhérer. On applique les deux surfaces l'une contre l'autre et on obtient, par refroidissement une forte adhérence qui permet la manipulation immédiate du produit.

De nombreux supports peuvent ainsi être traités. On peut citer, par exemple, l'aluminium, l'inox, des plastiques comme le polychlorure de vinyle, le copolymère acrylonitrile-butadiène-styrène (ABS), des polyesters stratifiés, des polyamides, des polyoléfines traitées, de la mousse de polyuréthanne et de polychlorure de vinyle, des polycarbonates, etc. On peut aussi traiter des matériaux comme le bois, des panneaux de particules, du carton, du papier. On peut aussi faire adhérer des supports textiles tels que la viscose, des polyesters et polyamides non tissés.

Pour appliquer le polymère thermofusible selon l'invention, on peut utiliser tout moyen approprié et, notamment, une buse, une filière plate, par exemple. Ainsi, le polymère thermofusible est fondu dans un fondoir étanche à l'humidité et convoyé, au moyen d'une pompe à engrenage, à travers des tuyaux chauffés, vers la tête d'application. L'application par filière plate est particulièrement utile lors de contrecollage ou de couchage d'un support flexible présenté en laize. La masse thermofusible est fondue dans un fondoir étanche à l'humidité et envoyée, à l'aide d'une pompe ou vis d'extrusion, vers la filière. On peut aussi appliquer le polymère thermofusible selon l'invention, par extrusion à partir de cartouches chauffées pour dépose en cordons. Cette méthode est utilisable pour un remplissage ou le collage de pièces de faible dimension.

Le polymère selon l'invention est particulièrement approprié pour le collage en ligne à grande vitesse, par suite de ses propriétés lui permettant d'être utilisé sans solvant et lui conférant une résistance à la chaleur accrue et une inertie vis-à-vis des solvants et de l'eau.

Il est aussi utile pour le contre-collage de films souples. Par co-extrusion ou extrusion-couchage d'un film, sur des supports de toute nature dans le but d'y modifier les propriétés physiques et chimiques (résistance thermique et mécanique) sans qu'il soit nécessaire d'appliquer sur le premier substrat un primaire d'accrochage pour assurer la parfaite adhérence des films.

EXEMPLE 1

Dans un réacteur de deux litres en verre Pyrex propre et sec, chauffé par un fluide thermique, on introduit le polyol (l'homopolyester à bas point de fusion dérivant de l'acide adipique et de l'hexanediol) en quantité représentant 60% de la masse totale du polymère final. On le fait fondre à une température d'environ 120°C. Lorsque le mélange est fondu, on ajoute, sous bonne agitation, la résine polycaprolactone, telle que le produit "Tone PCL 700" de Union Carbide, en quantité représentant 25 parties de la masse totale du polymère final. On fait le vide dans le réacteur, à une pression de 19,9 kPa, pendant trente minutes afin d'éliminer l'eau contenue dans le polyol. Au fur et à mesure de la dissolution de la résine dans le polyester, la pression varie pour atteindre 3,99 kPa. Après deux à trois heures, on admet que la teneur en eau dans le mélange est négligeable pour influencer la suite de la réaction.

Le réacteur étant toujours sous vide (3,99 kPa), on introduit, sous agitation, le diisocyanate de diphénylméthane 4,4′ liquide, en quantité représentant 15 parties de la masse totale du polymère final, à l'aide d'une ampoule à brome.

Après l'addition complète de diisocyanate, on laisse la réaction se poursuivre pendant quatre heures à une température de 120-130°C. ON vérifie la teneur en groupes isocyanates qui doit être de l'ordre de 2%.

Le polymère obtenu peut alors être utilisé pour faire adhérer deux surfaces de matériaux identiques ou différents, tels que mentionnés précédemment ou bien on coule le polymère, dans des emballages parfaitement étanches, afin d'être stocké à l'abri de l'humidité.

Le polymère obtenu se présente sous la forme d'une masse solide à une température inférieure à 40°C.

Le polymère ainsi obtenu peut être utilisé pour faire adhérer deux surfaces en ABS et en Alu. Pour cela, on applique une couche de polymère thermofusible par tout procédé connu dans la technique. Par exemple, on fait fondre le polymère à 150°C dans un fondoir étanche à l'humidité et il est convoyé ensuite au moyen d'une pompe à engrenage, à travers des tuyaux chauffés, vers la tête d'application. Le polymère est appliqué sur la surface d'un des matériaux, puis on amène la surface non enduite de l'autre matériau au contact de la couche de polymère adhésif. On obtient une adhérence élevée permettant une manipulation immédiate après refroidissement.

Le produit obtenu présente de bonnes propriétés mécaniques, comme indiqué sur le tableau suivant. A titre de comparaison, on indique les propriétés mécaniques d'un polymère thermofusible témoin, à base de copolymère éthylène/acétate de vinyle.

## TABLEAU I

### CARACTERISTIQUES MECANIQUES COMPARATIVES

#### A 23°C

|  | Témoin | Exemple 1 |
|---|---|---|
|  |  | PU |
| Module initial................. | 6 N/mm² | 65 N/mm² |
| Contrainte maxi initiale ...... | 1,6 N/mm² | 2 N/mm² |
| Module après 10 jours ......... | 6 N/mm² | 160 N/mm² |
| Contrainte maxi après 10 jours | 1,6 N/mm² | 18 N/mm² |
| Allongement à la rupture après 10 jours ...................... | 700 % | 500 % |
| Collage après 5 jours Cisaillement : |  |  |
| . BOIS/ABS ................... | 1,4 N/mm² | 5 N/mm² |
| . ABS/ALU ................... | 0,9 N/mm² | 7 N/mm² |

#### A 120°C

|  | Témoin | Exemple 1 |
|---|---|---|
| Module après 7 jours .......... | 0 | 0,7 N/mm² |
| Contrainte maxi après 7 jours . | 0 | 0,5 N/mm² |
| Module après 14 jours ........ | 0 | 1,0 N/mm² |
| Contrainte maxi après 14 jours | 0 | 0,8 N/mm² |
| Collage après 14 jours Cisaillement : |  |  |
| . ABS/ALU ................... | 0 | 0,5 N/mm² |

N.B. Le thermofusible classique témoin a un point de ramollissement inférieur à 100°C et, par conséquence, aucune résistance mécanique à 120°C.

EXEMPLES 2 à 6

On opère selon la méthode décrite dans l'Exemple 1 en employant les composants et la proportion de composants indiqués dans le tableau II ci-dessous

## TABLEAU II

| Exemple | 2 | 3 | 4 | 5 | 6 |
|---|---|---|---|---|---|
| PCL 700 (Union Carbide) | 11,5 | 36 | 30 | 12 | 17 |
| 1 Polyol | 61,5 | 52 | 44 | 77 | 68,5 |
| 2 Diisocyanate | 27 | 12 | 26 | 11 | - |
| 3 Adduct | - | - | - | - | 14,5 |
| **A 23°C** | | | | | |
| Module initial | 65 N/mm² | 83 N/mm² | 60 N/mm² | 78 N/mm² | 72 N/mm² |
| Contrainte maxi initiale | 6,8 N/mm² | 9,2 N/mm² | 6,1 N/mm² | 9,2 N/mm² | 7,5 N/mm² |
| Module après 10 jours | 160 N/mm² | 168 N/mm² | 127 N/mm² | 150 N/mm² | 130 N/mm² |
| Allongement à la rupture après 10 jours | 50% | ) 500% | 200% | ) 500% | 500% |
| Collage après 5 jours Cisaillement | | | | | |
| Bois/ABS | 5,0 N/mm² | 5,0 N/mm² | 1,3 N/mm² | 4,3 N/mm² | 8,0 N/mm² |
| ABS/Alu | 2,3 N/mm² | 4,9 N/mm² | 2,0 N/mm² | 2,6 N/mm² | 5,4 N/mm² |
| **A 120°C** | | | | | |
| Module après 7 jours | 0,4 N/mm² | 0,1 N/mm² | 0,2 N/mm² | 0,02 N/mm² | 0,2 N/mm² |
| Contrainte maxi après 7 jours | 0,3 N/mm² | 0,2 N/mm² | 0,1 N/mm² | 0,03 N/mm² | 0,1 N/mm² |
| Module après 14 jours | 0,5 N/mm² | 0,5 N/mm² | 0,7 N/mm² | 0,2 N/mm² | 0,6 N/mm² |
| Contrainte maxi après après 14 jours | 0,7 N/mm² | 0,6 N/mm² | 0,6 N/mm² | 0,2 N/mm² | 0,6 N/mm² |
| Collage après 14 jours Cisaillement | | | | | |
| ABS/Alu | 0,02 N/mm² | 0,1 N/mm² | 0,1 N/mm² | 0,2 N/mm² | 0,07 N/mm² |

1 Polyol : homopolyester aliphatique acide adipique et hexanediol, poids moléculaire 5 000
2 Diisocyanate de fonctionnalité 2 type 44M de Bayer ou Isonate M342 de Dow Chemical
3 Adduct type Desmodur PC de Bayer.

**Revendications**

1. Polymère thermofusible, utile comme agent adhésif, caractérisé en ce qu'il contient un prépolymère bloc comprenant des séquences polyuréthanne et polycaprolactone et comprend:

7

a.- une résine à base de polycaprolactone contenant de 0,07 à 0,15% de groupements OH libres par mole;

b.- un polyol à bas point de fusion; et

c.- un diisocyanate de fonctionalité comprise entre 1,1 et 4 et comprenant de 1 à 5% de groupes NCO libres par mole de polymère thermofusible.

2. Polymère selon la revendication 1, caractérisé en ce que la proportion pondérale des séquences uréthannes -NH-CO.O- et des séquences polycaprolactone -$(C_6H_{10}O_2)_n$- est comprise entre 1,1% et 2,1% et 10% et 40% respectivement.

3. Polymère selon une quelconque des revendications 1 ou 2, caractérisé en ce que le prépolymère à base de polycaprolactone comprenant des groupements OH libres est une résine polyester ayant une masse moléculaire moyenne de 30 000 à 40 000, un point de fusion de 60°C, une température de transition vitreuse de -60°C.

4. Polymère selon la revendication 3, caractérisé en ce que ladite résine est choisie dans le groupe comprenant les polyesters ayant la structure caprolactone, tels le produit commercialisé sous la dénomination commerciale TONE PCL 700 par la société Union Carbide, associé à un polyuréthanne linéaire faiblement cristallin dérivant d'un polyester et d'un polyisocyanate ou à un copolyester formé par polycondensation de l'acide adipique, de l'acide isophtalique et de l'hexanediol.

5. Polymère selon une quelconque des revendications 1 à 4, caractérisé en ce le polyol est un homopolyester aliphatique à bas point de fusion, inférieur à 100°C, comprenant des groupes terminaux hydroxyles et dont la masse moléculaire est comprise entre 2 000 et 6 000, l'indice d'hydroxyle est compris entre 20 et 110 et le point de fusion est situé entre 50°C et 90°C.

6. Polymère selon la revendication 5, caractérisé en ce que le polyol consiste en un polymère de condensation de l'acide adipique et de l'hexanediol ou un polyester cristallin issu de la réaction de polycondensation de diacide linéaire et diol linéaire.

7. Polymère selon une quelconque des revendications 1 à 6, caractérisé en ce que le diisocyanate est chosi dans le groupe comprenant le diisocyanate de diphénylméthane 4,4' pur, les mélanges d'isomères 2,4' et 4,4' de diisocyanate de diphénylméthane, les adducts de diisocyanate, le diisocyanate d'isophorone et le diisocyanate d'hexaméthylène.

8. Polymère selon une quelconque des revendication 1 à 7, caractérisé en ce que les proportions pondérales des composants sont respectivement comprises entre 10 et 40 pour le prépolymère de caprolactone, entre 40 et 80 pour le polyol et entre 10 et 30 pour le diisocyanate.

9. Polymère selon l'une quelconque des revendications 1 à 8, caractérisé en ce qu'il est formé:

a.- de polycaprolactone dont le pourcentage de groupes hydroxyles par mole de polymère thermofusible est compris entre 0,07 et 0,15;

b.- d'homopolyester d'acide adipique et d'hexanediol dont l'indice d'hydroxyle est compris entre 20 et 110; et

c.- de diisocyanate de diphénylméthane 4,4'.

10. Polymère selon la revendication 9, caractérisé en ce que les proportions pondérales des composants sont respectivement de 25/60/15.

11. Polymère selon l'une quelconque des revendications 1 à 10, caractérisé en ce qu'il contient de 1,5 à 2% de groupes isocyanates libres.

12. Polymère selon l'une quelconque des revendications 1 à 11, caractérisé en ce qu'il contient 2% de groupes isocyanates libres.

13. Polymère selon l'une quelconque des revendications 1 à 12, caractérisé en ce que sa viscosité à 150°C est comprise entre 5 000 et 100 000 m Pa.s.

EP 0 283 345 B1

**14.** Polymère selon l'une quelconque des revendications 1 à 13, caractérisé en ce qu'il se présente sous forme solide à une température inférieure à 40°C.

**15.** Utilisation du polymère thermofusible conforme à l'une quelconque des revendications 1 à 14, comme agent permettant l'adhérence de surfaces de matériaux identiques ou différents.

**Claims**

**1.** Thermally fusible polymer, useful as an adhesive, characterized in that it contains a block prepolymer comprising polyurethane and polycaprolactone sequences and includes:

a.- a polycaprolactone-based resin containing 0.07 to 0.15% of free OH groups per mole;

b.- a low melting point polyol; and

c.- a diisocyanate having a functionality of between 1.1 and 4 and including from 1 to 5% of free NCO groups per mole of thermally fusible polymer.

**2.** Polymer according to claim 1, characterized in that the proportions by weight of the NH-CO.O-urethane sequences and the $-(C_6H_{10}O_2)_n-$ polycaprolactone sequences are respectively comprised between 1.1% to 2.1% and 10% to 40%.

**3.** Polymer according to either one of claims 1 or 2, characterized in that the caprolactone based prepolymer including free OH groups is a polyester resin having an average molecule weight of 30 000 to 40 000, a melting point of 60°C and a glass transition temperature of -60°C.

**4.** Polymer according to claim 3, characterized in that said resin is selected form the group comprising polyesters having the caprolactone structure such as the product sold under the commercial name TONE PCL 700 by the Union Carbide Corporation, in association with a weakly crystalline linear polyurethane derived from a polyester and a polyisocyanate, or with a copolyester formed by polycondensation of adipic acid, isophtalic acid and hexanediol.

**5.** Polymer according to any one of claims 1 to 4, characterized in that the polyol is an aliphatic homopolyester having a low melting point, less than 100°C, including hydroxyl terminal groups, the molecular weight of which is comprised between 2 000 and 6 000, the hydroxyl index of which is comprised between 20 and 110 and the melting point of which lies between 50°C and 90°C.

**6.** Polymer according to claim 5, characterized in that the polymer consists of a condensation polymer of adipic acid and hexanediol or a crystalline polyester derived from the polycondensation reaction of linear diacid and linear diol.

**7.** Polymer according to any one of claims 1 to 6, characterized in that the diisocyanate is selected from the group comprising pure 4, 4' diphenylmethane diisocyanate, mixtures of 2,4' and 4, 4' isomers of diphenylmethane diisocyanate, diisocyanate adducts, isophorone diisocyanate and hexamethylene diisocyanate.

**8.** Polymer according to any one of claims 1 to 7, characterized in that the proportions by weight of the constituents are respectively comprised between 10 and 40 for the caprolactone prepolymer, between 40 and 80 for the polyol and between 10 and 30 for the diisocyanate.

**9.** Polymer according to any one of claims 1 to 8, characterized in that it consists of:

a.- polycaprolactone the percentage of hydroxyl groups per mole of thermally fusible polymer is comprised between 0.07 and 0.15;

b.- homopolyester of adipic acid and hexanediol the hydroxyl index of which is comprised between 20 and 110; and

c.- 4,4' diphenylmethane diisocyanate.

**10.** Polymer according to claim 9, characterized in that the proportions by weight of the constituents are respectively 25/60/15.

**11.** Polymer according to any one of claims 1 to 10, characterized in that it contains from 1.5 to 2% of free

9

isocyanate groups.

12. Polymer according to any one of claims 1 to 11, characterized in that it contains 2% of free isocyanate groups.

13. Polymer according to any one of claims 1 to 12, characterized in that its viscosity at 150°C is comprised between 5 000 and 100 000 mPa.s.

14. Polymer according to any one of claims 1 to 13, characterized in that it has a solid form at temperatures less than 40°C.

15. Use of the thermally fusible polymer in accordance with any one of claims 1 to 14 as an agent allowing surfaces of identical or differing materials to be bonded.

**Patentansprüche**

1. Als Kleber verwendbares warmschmelzendes Polymerisat, dadurch gekennzeichnet, dass es einen Vorpolymerisatblock mit Polyurethan- und Polycaprolaktonsequenzen enthält und umfasst:
   a.- ein Harz auf Polycaprolaktonbasis mit 0,07 bis 0,15% freier OH-Gruppen pro Mol;
   b.- ein Polyol mit niedrigem Schmelzpunkt, und
   c.- ein Diisozyanat mit einer Funktionalität von 1,1 bis 4 das 1 bis 5 freie NCO-Gruppen pro Mol warmschmelzenden Polymerisats enthält.

2. Polymerisat nach Anspruch 1, dadurch gekennzeichnet, dass der Gewichtsanteil der Urethan-NH-CO.O- und der Polycaprolakton -$(C_6H_{10}O_2)_n$- Gruppen zwischen 1,1% und 2,1% bzw. 10% und 40% liegt.

3. Polymerisat nach Anspruch 1 oder 2, dadurch gekennzeichnet, dass das freie OH-Gruppen umfassende Vorpolymerisat auf Polycaprolaktonbasis ein Polyesterharz mit einem mittleren Molekulargewicht von 30 000 bis 40 000, einem Schmelzpunkt von 60°C und einer Glasübergangstemperatur von -60°C ist.

4. Polymerisat nach Anspruch 3, dadurch gekennzeichnet, dass das Harz zu der Gruppe gehört die die eine Caprolaktonstruktur aufweisende Polyester umfasst, wie das unter der Bezeichnung TONE PCL 700 von der Firma Union Carbide vertriebene Erzeugnis, in Verbindung mit von einem Polyester und einem Polysozyanat abgeleiteten, leicht kristallinen linearen Polyurethan, oder mit einem durch Polykondensation von Adipinsäure, Isophtalsäure und von Hexanediol hergestellten Mischpolyester.

5. Polymerisat nach einem der Ansprüche 1 bis 4, dadurch gekennzeichnet, dass das Polyol ein niedrigschmelzender, aliphatischer Homopolyester mit einem Schmelzpunkt von weniger als 100°C, mit Hydroxyl-Endgruppen und mit einem Molekulargewicht 2 000 bis 6 000 ist, wobei die Hydroxylzahl zwischen 20 bis 110 und der Schmelzpunkt zwischen 50 bis 90°C liegt.

6. Polymerisat nach Anspruch 5, dadurch gekennzeichnet, dass das Polyol ein Kondensationspolymerisat der Adipinsäure und des Hexanediol ist, oder aus einem von der Polykondensationsreaktion einer linearen zweiwertigen Säure mit linearem Diol herrührenden kristallinen Mischester (Polyester) besteht.

7. Polymerisat nach einem der Ansprüche 1 bis 6, dadurch gekennzeichnet, dass das Diisozyanat zur Gruppe gehört, die reines 4,4' Diphenylmethandiisozyanat, Gemische von 2,4' und 4,4' Diisozyanat- und Diphenylmethanisomeren, Diisozyanataddukte, Isophorondiisozyanat und Hexamethylendiisozyanat umfasst.

8. Polymerisat nach einem der Ansprüche 1 bis 7, dadurch gekennzeichnet, dass die Gewichtsanteile der Bestandteile zwischen 10 und 40 für das Caprolakton-Vorpolymerisat, zwischen 40 und 80 für das Polyol und zwischen 10 und 30 für das Diisozyanat liegen.

9. Polymerisat nach einem der Ansprüche 1 bis 8, dadurch gekennzeichnet, dass es besteht aus:
   a.- Polycaprolakton mit 0,07 bis 0,15 Gew.% Hydroxylgruppen pro Mol warmschmelzenden Polymerisats;
   b.- Adipinsäure- und Hexanediol-Homopolyester mit einer Hydroxylzahl von 20 bis 110; und

c.- 4,4' Diphenylmethan-Diisozyanat.

10. Polymerisat nach Anspruch 9, dadurch gekennzeichnet, dass die Gewichtsanteile der Bestandteile 25/60/15 betragen.

11. Polymerisat nach einem der Ansprüche 1 bis 10, dadurch gekennzeichnet, dass es 1,5 bis 2% freie Isozyanatgruppen enthält.

12. Polymerisat nach einem der Ansprüche 1 bis 11, dadurch gekennzeichnet, dass es 2% freie Isozyanatgruppen enthält.

13. Polymerisat nach einem der Ansprüche 1 bis 12, dadurch gekennzeichnet, dass es bei einer Temperatur von 150° C eine Viskosität von 5 000 bis 100 000 mPa.s. besitzt.

14. Polymerisat nach einem der Ansprüche 1 bis 13, dadurch gekennzeichnet, dass es bei einer Temperatur von weniger als 40° C in fester Form vorliegt.

15. Verwendung des warmschmelzenden Polymerisats nach einem der Ansprüche 1 bis 14 als Mittel zum Kleben von Oberflächen gleichartiger oder verschiedenartiger Materialien.